(19) Europäisches Patentamt
European Patent Office
Office européen des brevets

(11) EP 4 382 497 A1

(12) EUROPEAN PATENT APPLICATION
published in accordance with Art. 153(4) EPC

(43) Date of publication:
12.06.2024 Bulletin 2024/24

(51) International Patent Classification (IPC):
C03C 21/00 (2006.01)   C03C 15/00 (2006.01)
G09F 9/30 (2006.01)

(21) Application number: 22887370.9

(22) Date of filing: 26.09.2022

(52) Cooperative Patent Classification (CPC):
C03C 15/00; C03C 21/00; G09F 9/30

(86) International application number:
PCT/KR2022/014308

(87) International publication number:
WO 2023/075166 (04.05.2023 Gazette 2023/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.11.2021 KR 20210148191

(71) Applicant: Samsung Electronics Co., Ltd.
Suwon-si, Gyeonggi-do 16677 (KR)

(72) Inventors:
• LEE, Hosoon
Suwon-si, Gyeonggi-do 16677 (KR)
• YOO, Gyejoon
Suwon-si, Gyeonggi-do 16677 (KR)
• LEE, Wonsun
Suwon-si, Gyeonggi-do 16677 (KR)
• CHOI, Jinsoo
Suwon-si, Gyeonggi-do 16677 (KR)
• CHOI, Hyunsuk
Suwon-si, Gyeonggi-do 16677 (KR)

(74) Representative: Appleyard Lees IP LLP
15 Clare Road
Halifax HX1 2HY (GB)

(54) GLASS SUBSTRATE FOR FLEXIBLE DISPLAY, AND DISPLAY DEVICE COMPRISING SAME

(57) Disclosed are a glass substrate for a flexible display and a display device comprising same. According to various embodiments, the glass substrate may comprise two or more parts having different thicknesses, for example, a first part and a second part having a thickness smaller than that of the first part, and a third part connecting the first part and the second part, wherein the strengthened depth of the first part may be greater than that of the second part. Various other embodiments are possible.

FIG. 7

EP 4 382 497 A1

## Description

1. Technical Field

Various embodiments of the present disclosure relate to a glass substrate for a flexible display and a display device including the same.

2. Background Art

An electronic device refers to a device that performs a specific function according to a loaded program, such as a home appliance, an electronic note, a portable multimedia player, a mobile communication terminal, a tablet personal computer (PC), a video/audio device, a desktop/laptop computer, a vehicle navigation system, and the like. For example, such electronic devices may output stored information as sound or images. As electronic devices have become highly integrated and high-speed and high-volume wireless communication has come into wider use, various functions have been mounted in a single electronic device such as a mobile communication terminal. For example, an entertainment function, such as gaming, a multimedia function, such as music/video play, a communication and security function for mobile banking, a scheduling function, or an electronic wallet function as well as a communication function have been integrated into a single electronic device.

With a significant decrease in a functional gap of each manufacturer, electronic devices have become slimmer to meet consumers' purchasing needs. In order to increase the rigidity of electronic devices, strengthen the design aspect thereof, and differentiate functional elements thereof, electronic devices have been improved. Such electronic devices are being transformed from a uniform rectangular shape into a variety of shapes. For example, electronic devices may be conveniently carried and have a transformable structure that may use a large-screen display when being used. As a part of these electronic devices, foldable or rollable electronic devices are constantly being introduced, and the support structure for foldable, rollable, or bendable displays may also be improved.

Disclosure of the Invention

Technical Goals

To improve strength, a glass substrate that may be used in an electronic device may generate a stress in the substrate through chemical strengthening to have increased strength against external impact. A glass substrate for a flexible display is a glass substrate having a portion with two or more different thicknesses, instead of having a single thickness, and when the same degree of chemical strengthening is performed on the portion with different thicknesses, a difference may occur in the amount of expansion.

Specifically, when a single depth of layer is formed on a glass substrate having various thicknesses regardless of a thickness of each position, the amounts of expansion of a thick portion and a portion with a single depth of layer may be different from each other, and degradation of surface quality such as warping and bending may occur on the glass substrate.

A glass substrate for a flexible display according to various embodiments may provide a glass substrate having the amount of expansion that is substantially the same or controlled substantially at the same level over the glass substrate, by variably forming the depth of layer according to different thicknesses for each position of the glass substrate having two or more different thicknesses.

Technical Solutions

According to various embodiments, a glass substrate for a flexible display includes a first portion, a second portion, and a third portion that connects the first portion and the second portion. An average thickness of the first portion is greater than an average thickness of the second portion, an average of a depth of layer of the first portion is greater than an average of a depth of layer of the second portion, and a depth of layer of the third portion is determined according to a thickness of the third portion.

According to various embodiments, a display device for a flexible display includes a display module including a folding portion and a non-folding portion adjacent to the folding portion, and a glass substrate disposed on the display module.

Effects

The glass substrate for the flexible display according to various embodiments may provide a glass substrate having an expansion rate and an amount of expansion that is the same or substantially the same regardless of the thickness of each portion, and having improved warping or bending.

According to various embodiments, the glass substrate may maintain a ratio of the depth of layer according to the thickness within a predetermined range, regardless of the position, which may improve strength against internal impact of the glass substrate.

Brief Description of Drawings

FIG. 1 is a block diagram illustrating an electronic device in a network environment according to various embodiments.

FIG. 2 is a view of an electronic device in an unfolded state according to various embodiments.

FIG. 3 is a view of an electronic device in a folded state according to various embodiments.

FIG. 4 is a perspective view illustrating an example of an unfolded state and an intermediate state of an electronic device according to various embodiments.

FIG. 5 is a front perspective view of an electronic device in a closed state and an open state according to various embodiments.

FIG. 6 is a rear perspective views of an electronic device in a closed state and an open state according to various embodiments.

FIG. 7 is a cross-sectional view of a glass substrate for a flexible display according to various embodiments.

FIG. 8 is a diagram illustrating a process of a glass substrate for a flexible display according to various embodiments.

FIG. 9 is a diagram illustrating a process of a glass substrate for a flexible display according to various embodiments.

FIG. 10 is a diagram illustrating a process of a glass substrate for a flexible display according to various embodiments.

Best Mode for Carrying Out the Invention

Hereinafter, embodiments of the present disclosure will be described with reference to the accompanying drawings.

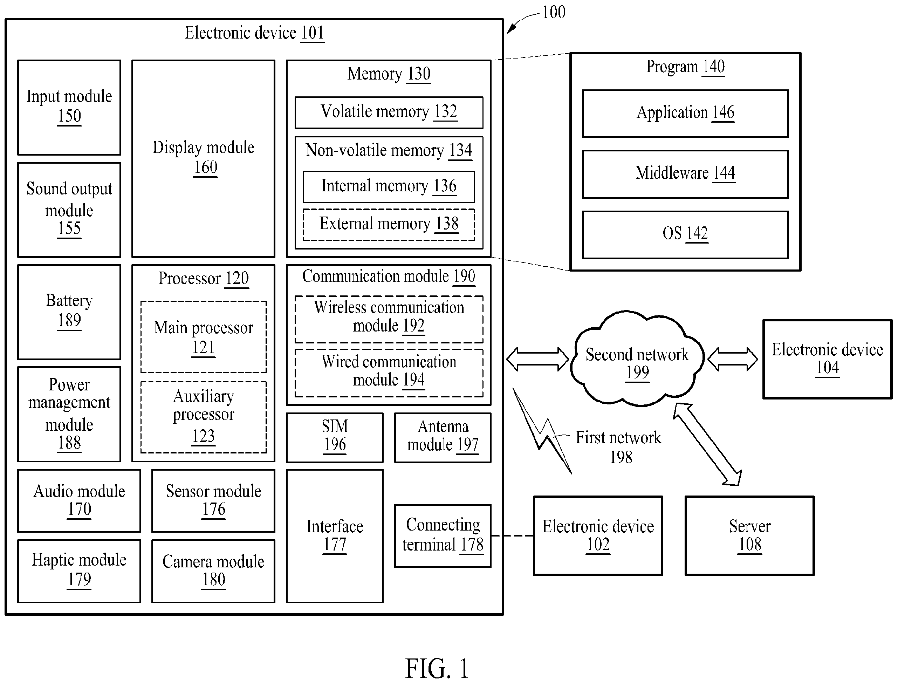

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated through machine learning. Such learning may be performed, for example, by the electronic device 101 in which an artificial intelligence is executed, or via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, the hologram device, or the projector. According to an embodiment, the display module 160 may include a touch sensor adapted to sense a touch, or a pressure sensor adapted to measure an intensity of a force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a portion of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multi components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a portion of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

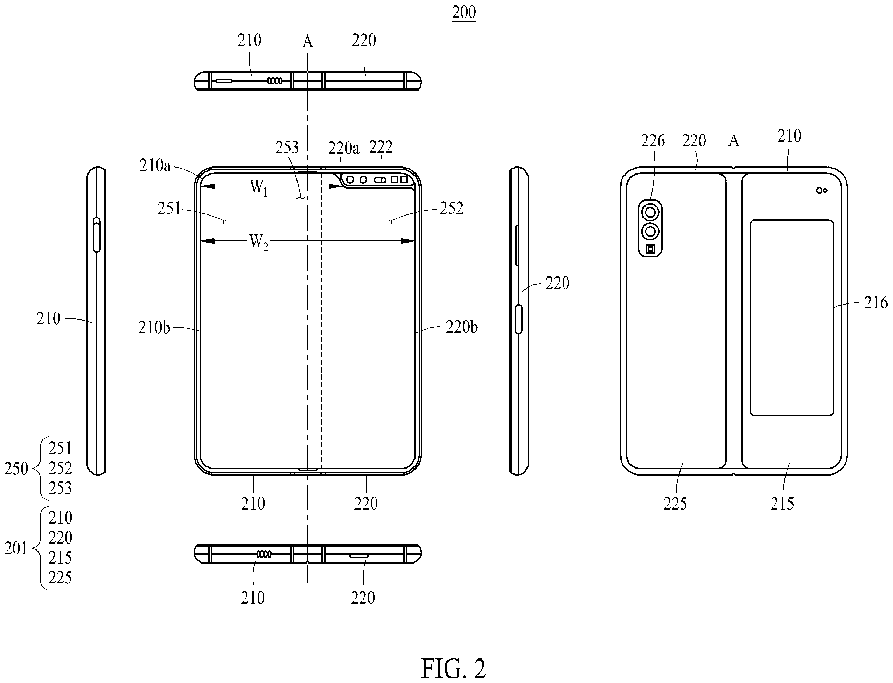

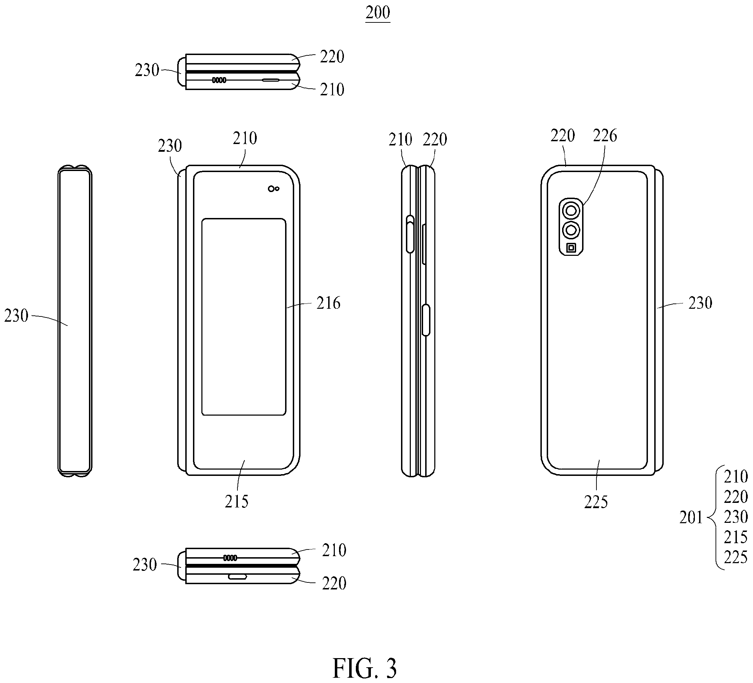

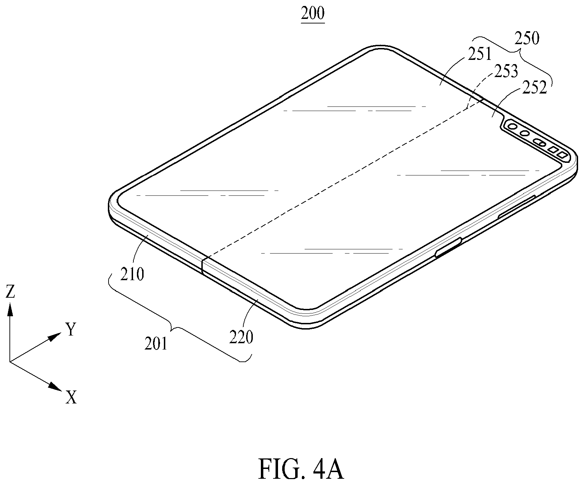

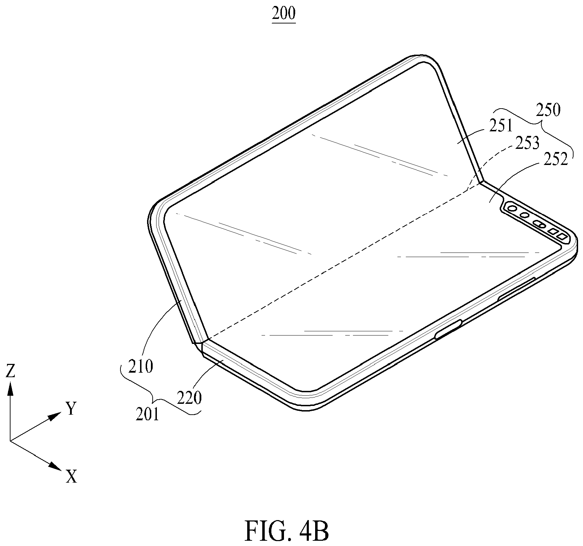

FIG. 2 is a view of an electronic device 200 in an unfolded state according to various embodiments. FIG. 3 is a view of the electronic device 200 in a folded state according to various embodiments. FIGS. 4A and 4B are perspective views illustrating an example of a fully unfolded state and a partially unfolded state (or an intermediate state) of the electronic device 200 according to various embodiments.

The electronic device 200 of FIGS. 2 through 4B is an example of the electronic device 101 of FIG. 1, and may be a foldable or bendable electronic device.

FIGS. 4A and 4B illustrate a spatial coordinate system defined by an X-axis, a Y-axis, and a Z-axis that are orthogonal to each other. Here, the X-axis may represent a width direction of the electronic device, the Y-axis may represent a length direction of the electronic device, and the Z-axis may represent a height (or thickness) direction of the electronic device. In the following description, a "first direction" may refer to a direction parallel to the Z-axis.

Referring to FIGS. 2 and 3, in an embodiment, the electronic device 200 may include a foldable housing 201, and a flexible or foldable display 250 (hereinafter simply referred to as the "display" 250) (e.g., the display device 160 of FIG. 1) disposed in a space formed by the foldable housing 201. According to an embodiment, a surface on which the display 250 is disposed (or a surface on which the display 250 is viewed from the outside of the electronic device 200) may be defined as a front surface of the electronic device 200. In addition, a surface opposite to the front surface may be defined as a rear surface of the electronic device 200. Further, a surface surrounding a space between the front surface and the rear surface may be defined as a side surface of the electronic device 200.

According to various embodiments, the foldable housing 201 may include a first housing structure 210, a second housing structure 220 including a sensor area 222, a first rear cover 215, a second rear cover 225, and a hinge structure 230. Here, the hinge structure 230 may include a hinge cover that covers a foldable portion of the foldable housing 201. The foldable housing 201 of the electronic device 200 is not limited to the shape and combination shown in FIGS. 2 and 3, and may be implemented in a different shape or a different combination of components. For example, in another embodiment, the first housing structure 210 and the first rear cover 215 may be integrally formed, and the second housing structure 220 and the second rear cover 225 may be integrally formed.

According to various embodiments, the first housing structure 210 may be connected to the hinge structure 230, and may include a first surface facing a first direction, and a second surface facing a second direction opposite to the first direction. The second housing structure 220 may be connected to the hinge structure 230 and may include a third surface facing a third direction and a fourth surface facing a fourth direction opposite to the third direction. The second housing structure 220 may rotate with respect to the first housing structure 210 about the hinge structure 230. A state of the electronic device 200 may be changed to a folded state or an unfolded state.

According to an embodiment, the first surface may face the third surface in a state in which the electronic device 200 is fully folded, and the third direction may be identical to the first direction in a state in which the electronic device 200 is fully unfolded.

According to various embodiments, the first housing structure 210 and the second housing structure 220 are disposed on both sides with respect to a folding axis A and generally may be symmetrical with respect to the folding axis A. As to be described hereinafter, an angle or distance between the first housing structure 210 and the second housing structure 220 may vary depending on whether the electronic device 200 is in the unfolded state, the folded state, or an intermediate state (e.g., a partially folded state or a partially unfolded state). According to an embodiment, unlike the first housing structure 210, the second housing structure 220 may additionally include the sensor area 222, in which various sensors are arranged. However, the first housing structure 210 and the second housing structure 220 may be mutually symmetrical in areas other than the sensor area 222. In another embodiment, the sensor area 222 may be additionally disposed in or replaced with at least a partial area of the second housing structure 220. The sensor area 222 may include, for example, a camera hole area, a sensor hole area, an under-display camera (UDC) area, and/or an under-display sensor (UDS) area. According to various embodiments, as shown in FIG. 2, the first housing structure 210 and the second housing structure 220 may together form a recess for accommodating the display 250. In an embodiment, due to the sensor area 222, the recess may have at least two different widths in a direction perpendicular to the folding axis A. For example, the recess may have a first width $W_1$ between a first portion 210a of the first housing structure 210 parallel to the folding axis A and a first portion 220a of the second housing structure 220 formed on a periphery of the sensor area 222, and a second width $W_2$ formed by a second portion 210b of the first housing structure 210 and a second portion 220b of the second housing structure 220 not corresponding to the sensor area 222 and being parallel to the folding axis A. In this case, the second width $w_2$ may be longer than the first width wi. In an embodiment, the first portion 220a and the second portion 220b of the second housing structure 220 may be at different distances from the folding axis A. The widths of the recess are not limited to the shown example. In another embodiment, the recess may have a plurality of widths due to the shape of the sensor area 222 or asymmetrical portions of the first housing structure 210 and the second housing structure 220. According to various embodiments, the sensor area 222 may be formed to have a predetermined area adjacent to one corner of the second housing structure 220. However, the arrangement, shape, and size of the sensor area 222 are not limited to the shown example. For example, in another embodiment, the sensor area 222 may be provided at another corner of the second housing structure 220 or in a predetermined area between an upper corner and a lower corner. In an embodiment, components embedded in the electronic device 200 to perform various functions may be exposed to the front surface of the electronic device 200 through the sensor area 222 or through one or more openings provided in the sensor area 222. In various embodiments, the components may include various types of sensors. The sensors may include, for example, at least one of a front camera, a receiver, or a proximity sensor. According to various embodiments, the sensor area 222 may not be included in the second housing structure 220 or may be formed at a position different from that shown in the drawings.

According to various embodiments, at least a portion of the first housing structure 210 and the second housing structure 220 may be formed of a metal material or a non-metal material having a selected magnitude of rigidity to support the display 250. At least a portion formed of the metal material may provide a ground plane for the electronic device 200, and may be electrically connected to a ground line formed on a PCB disposed inside the foldable housing 201.

According to various embodiments, the first rear cover 215 may be disposed on one side of the folding axis A on the rear surface of the electronic device 200, and may have, for example, a substantially rectangular periphery that may be enclosed by the first housing structure 210. Similarly, the second rear cover 225 may be disposed on the other side of the folding axis A on the rear surface of the electronic device 200, and may have a periphery that may be enclosed by the second housing structure 220.

According to various embodiments, the first rear cover 215 and the second rear cover 225 may be substantially symmetrical with respect to the folding axis A. However, the first rear cover 215 and the second rear cover 225 are not necessarily mutually symmetrical, and in another embodiment, the electronic device 200 may include a first rear cover 215 and a second rear cover 225 in various shapes. In another embodiment, the first rear cover 215 may be formed integrally with the first housing structure 210, and the second rear cover 225 may be formed integrally with the second housing structure 220.

According to various embodiments, the first rear cover 215, the second rear cover 225, the first housing structure 210, and the second housing structure 220 may form a space in which various components (e.g., a PCB, an antenna module, a sensor module, or a battery) of the electronic device 200 are to be arranged. In an embodiment, one or more components may be disposed or visually exposed on the rear surface of the electronic device 200. For example, at least a portion of a sub-display may be visually exposed through a first rear area 216 of the first rear cover 215. In another embodiment, one or more components or sensors may be visually exposed through a second rear area 226 of the second rear cover 225. In various embodiments, the sensors may include a proximity sensor and/or a rear camera module.

According to various embodiments, a front camera exposed to the front surface of the electronic device 200 through one or more openings provided in the sensor area 222, or a rear camera exposed through the second rear area 226 of the second rear cover 225 may include one or more lenses, an image sensor, and/or an ISP. A flash may include, for example, a light emitting diode (LED) or a xenon lamp. In some embodiments, two or more lenses (e.g., infrared camera, wide-angle, and telephoto lenses) and image sensors may be disposed on one surface of the electronic device 200.

Referring to FIG. 3, the hinge cover may be disposed between the first housing structure 210 and the second housing structure 220 to cover internal components (e.g., the hinge structure 230). According to an embodiment, the hinge structure 230 may be covered by a portion of the first housing structure 210 and a portion of the second housing structure 220, or may be exposed to the outside, depending on the state (e.g., the unfolded state, the intermediate state, or the folded state) of the electronic device 200.

According to an embodiment, when the electronic device 200 is in the unfolded state (e.g., the fully unfolded state) as illustrated in FIG. 2, the hinge structure 230 may be covered by the first housing structure 210 and the second housing structure 220 not to be exposed. In another example, when the electronic device 200 is in the folded state (e.g., the fully folded state) as illustrated in FIG. 3, the hinge structure 230 may be exposed to the outside, being between the first housing structure 210 and the second housing structure 220. In another example, when the first housing structure 210 and the second housing structure 220 are in the intermediate state where the first housing structure 210 and the second housing structure 220 are folded with a certain angle, a portion of the hinge structure 230 may be exposed to the outside between the first housing structure 210 and the second housing structure 220. In this example, an exposed area may be less than an area exposed in the fully folded state. In an embodiment, the hinge cover 230 may have a curved surface.

According to various embodiments, the display 250 may be disposed in a space formed by the foldable housing 201. For example, the display 250 may be seated on the recess formed by the foldable housing 201 and may be viewed from the outside through the front surface of the electronic device 200. For example, the display 250 may constitute most of the front surface of the electronic device 200. Accordingly, the front surface of the electronic device 200 may include the display 250, and a partial area of the first housing structure 210 and a partial area of the second housing structure 220, which are adjacent to the display 250. In addition, the rear surface of the electronic device 200 may include the first rear cover 215, a partial area of the first housing structure 210 adjacent to the first rear cover 215, the second rear cover 225, and a partial area of the second housing structure 220 adjacent to the second rear cover 225.

According to various embodiments, the display 250 may refer to a display having at least a partial area that is deformable into a flat surface or a curved surface. In an embodiment, the display 250 may include a folding area 253, a first area 251 disposed on one side of the folding area 253 (e.g., on the left side of the folding area 253 shown in FIG. 2), and a second area 252 disposed on the other side of the folding area 253 (e.g., on the right side of the folding area 253 shown in FIG. 2).

However, such an area division of the display 250 shown in FIG. 2 is merely an example, and the display 250 may be divided into a plurality of areas (e.g., four or more areas, or two areas) depending on a structure or functions thereof. For example, in an embodiment shown in FIG. 2, the display 250 may be divided into areas based on the folding area 253 extending in parallel to the folding axis A. In another embodiment, the display 250 may be divided into areas based on another folding axis (e.g., a folding axis parallel to a width direction of an electronic device).

According to various embodiments, the display 250 may be coupled to or disposed adjacent to a touch panel including a touch sensing circuit and a pressure sensor for measuring a strength (a pressure) of a touch. For example, the display 250 may be coupled to or disposed adjacent to a touch panel for detecting a stylus pen of an electromagnetic resonance (EMR) type, as an example of the touch panel.

According to various embodiments, the first area 251 and the second area 252 may have globally symmetrical shapes around the folding area 253. However, unlike the first area 251, the second area 252 may include a notch that is cut according to the presence of the sensor area 222, but may be symmetrical to the first area 251 in the other areas. In other words, the first area 251 and the second area 252 may include mutually symmetrical portions and mutually asymmetrical portions.

According to various embodiments, an edge thickness of each of the first area 251 and the second area 252 may be different from an edge thickness of the folding area 253. The edge thickness of the folding area 253 may be less than those of the first area 251 and the second area 252. For example, the first area 251 and the second area 252 may be asymmetrical in terms of the thickness when viewed in a cross section thereof. For example, an edge of the first area 251 may be formed to have a first radius of curvature, and an edge of the second area 252 may be formed to have a second radius of curvature different from the first radius of curvature. In another embodiment, the first area 251 and the second area 252 may be symmetrical in terms of the thickness when viewed in the cross section thereof.

Hereinafter, each area of the display 250, and operations of the first housing structure 210 and the second housing structure 220 depending on the state (e.g., the folded state, the unfolded state, or the intermediate state) of the electronic device 200 will be described.

According to various embodiments, when the electronic device 200 is in the unfolded state (e.g., FIG. 2), the first housing structure 210 and the second housing structure 220 may be arranged to face substantially the same direction while forming an angle of 180 degrees. The surface of the first area 251 of the display 250 and the surface of the second area 252 thereof may face the same direction (e.g., a front direction of an electronic device) while forming 180 degrees. The folding area 253 may form substantially the same plane in conjunction with the first area 251 and the second area 252. In another embodiment, when the electronic device 200 is in a flat state, the first housing structure 210 and the second housing structure 220 may be folded opposite while rotating by a predetermined angle (e.g., 360 degrees) with respect to each other such that the first rear cover 215 and the second rear cover 225 face each other. In other words, the first area 251 and the second area 252 of the display may be disposed to face in opposite directions with respect to each other.

According to various embodiments, when the electronic device 200 is in the folded state (e.g., FIG. 3), the first housing structure 210 and the second housing structure 220 may be arranged to face each other. The surface of the first area 251 and the surface of the second area 252 of the display 250 may face each other while forming a narrow angle (e.g., an angle between about 0 degrees to about 10 degrees). For example, at least a portion of the folding area 253 may form a curved surface having a predetermined curvature.

According to various embodiments, when the electronic device 200 is in the intermediate state, the first housing structure 210 and the second housing structure 220 may be arranged to form a certain angle (e.g., about 90 degrees) therebetween. The surface of the first area 251 and the surface of the second area 252 of the display 250 may form an angle greater than that in the folded state and smaller than that in the unfolded state. At least a portion of the folding area 253 may include a curved surface having a predetermined curvature, and the curvature may be less than that in the folded state.

FIG. 4A illustrates a fully unfolded state of the electronic device 200, and FIG. 4B illustrates an intermediate state in which the electronic device 200 is partially unfolded. As described above, the state of the electronic device 200 may be changed to the folded state or the unfolded state. According to an embodiment, when viewed in a direction of a folding axis (e.g., the axis A of FIG. 2), the electronic device 200 may be folded in two types, i.e., an "in-folding" type in which the front surface of the electronic device 200 is folded to form an acute angle, and an "out-folding" type in which the front surface of the electronic device 200 is folded to form an obtuse angle. For example, in the state in which the electronic device 200 is folded in the in-folding type, the first surface of the first housing structure 210 may face the third surface of the second housing structure 220. In the fully unfolded state, the first surface of the first housing structure 210 and the third surface of the second housing structure 220 may face the same direction (e.g., a direction parallel to the z-axis).

In another example, when the electronic device 200 is folded in the out-folding type, the second surface of the first housing structure 210 may face the fourth surface of the second housing structure 220.

In addition, although not shown in the drawing, the electronic device 200 may include a plurality of hinge axes (e.g., two parallel hinge axes including the axis A of FIG. 2 and another axis parallel to the axis A). In this example, the electronic device 200 may also be folded in a "multi-folding" type in which the in-folding type and the out-folding type are combined. In addition, although not shown in the drawing, the hinge axis may be formed in the longitudinal direction when viewed from above the electronic device 200, or it may be formed in the horizontal direction. For example, all the plurality of hinge axes may be arranged in the same direction. In another example, some of the plurality of hinge axes may be arranged in different directions and folded.

The in-folding type may refer to a state in which the display 250 is not exposed to the outside in the fully folded state. The out-folding type may refer to a state in which the display 250 is exposed to the outside in the fully folded state. FIG. 4B illustrates the intermediate state in which the electronic device 200 is partially unfolded in an in-folding process.

Although the state in which the electronic device 200 is folded in the in-folding type will be described below for convenience's sake, it should be noted that the description may be similarly applied in the state in which the electronic device 200 is folded in the out-folding type.

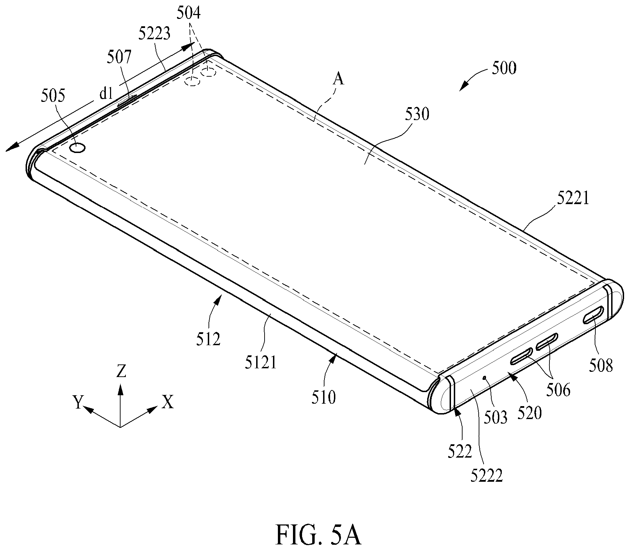

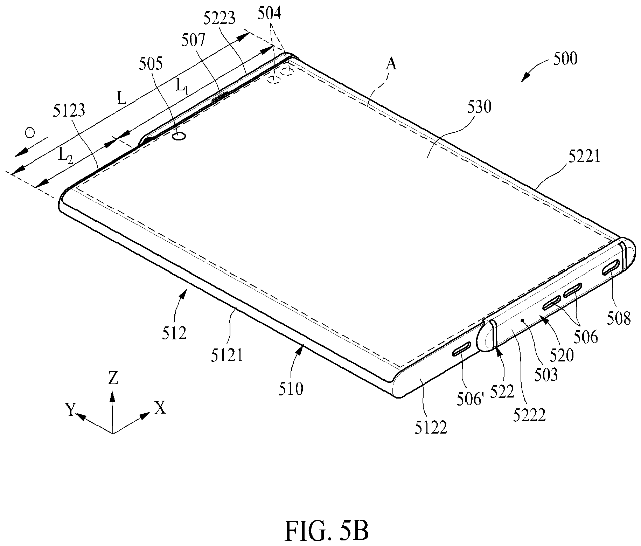

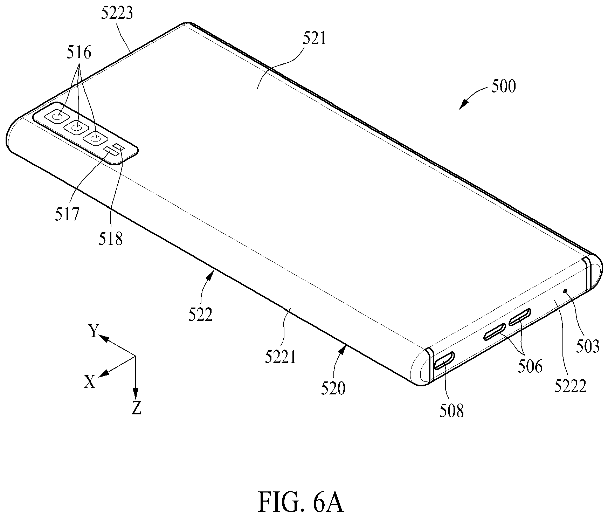

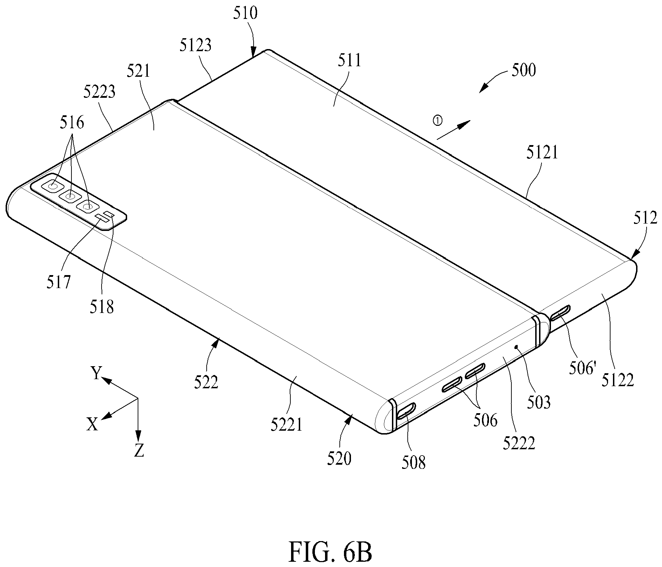

FIGS. 5A and 5B are front perspective views of an electronic device 500 in a closed state and an open state according to various embodiments. FIGS. 6A and 6B are rear perspective views of the electronic device 500 in a closed state and an open state according to various embodiments.

The electronic device 500 of FIG. 5A may be at least partially similar to the electronic device 101 of FIG. 1, or may further include other embodiments of the electronic device.

Referring to FIGS. 5A to 6B, the electronic device 500 may include a first housing 510, and a second housing 520 that is at least partially and movably coupled to the first housing 510. According to an embodiment, the first housing 510 may include a first plate 511, and a first side frame 512 that extends in a substantially vertical direction (e.g., a z-axis direction) along an edge of the first plate 511. According to an embodiment, the first side frame 512 may include a first side surface 5121, a second side surface 5122 extending from one end of the first side surface 5121, and a third side surface 5123 extending from the other end of the first side surface 5121. In an embodiment, the first housing 510 may include a first space that is at least partially closed from the outside through the first plate 511 and the first side frame 512.

According to various embodiments, the second housing 520 may include a second plate 521, and a second side frame 522 that extends in a substantially vertical direction (e.g., the z-axis direction) along an edge of the second plate 521. According to an embodiment, the second side frame 522 may include a fourth side surface 5221 facing away from the first side surface 5121, a fifth side surface 5222 extending from one end of the fourth side surface 5221 and at least partially coupled to the second side surface 5122, and a sixth side surface 5223 extending from the other end of the fourth side surface 5221 and at least partially coupled to the third side surface 5123. In another embodiment, the fourth side surface 5221 may extend from a structure other than the second plate 521 and may also be coupled to the second plate 521. According to an embodiment, the second housing 520 may include a second space that is at least partially closed from the outside through the second plate 521 and the second side frame 522. According to an embodiment, the first plate 511 and the second plate 521 may be disposed to at least partially form a rear surface of the electronic device 500. For example, the first plate 511, the second plate 521, the first side frame 512, and the second side frame 522 may be formed of, for example, a polymer, coated or colored glass, ceramic, metal (e.g., aluminum, stainless steel (STS), or magnesium), or a combination of two or more of the above materials.

According to various embodiments, the electronic device 500 may include a flexible display 530 disposed to be supported by the first housing 510 and the second housing 520. According to an embodiment, the flexible display 530 may include a flat portion supported by the second housing 520, and a bendable portion extending from the flat portion and supported by the first housing 510. According to an embodiment, the bendable portion of the flexible display 530 may be disposed in the first space of the first housing 510 not to be exposed to the outside when the electronic device 500 is closed, and may be exposed to the outside to extend from the flat portion while being supported by the first housing 510 when the electronic device 500 is open. Accordingly, the electronic device 500 may be a rollable electronic device in which a display screen of the flexible display 530 is expanded in response to an open operation according to a movement of the first housing 510 from the second housing 520.

According to various embodiments, in the electronic device 500, the first housing 510 may be at least partially inserted into the second space of the second housing 520, and may be coupled to be movable in direction ①. For example, in the closed state, the electronic device 500 may be maintained in a state in which the first housing 510 and the second housing 520 are coupled such that a distance between the first side surface 5121 and the fourth side surface 5221 is a first distance $L_1$. According to an embodiment, in the open state, the electronic device 500 may be maintained in a state in which the first housing 510 is protruding from the second housing 520 to have a second interval distance L in which the first side surface 5121 is protruding from the fourth side surface 5221 by a predetermined distance $L_2$. According to an embodiment, the flexible display 530 may be supported by the first housing 510 and/or the second housing 520 such that both ends thereof have curved edges, in the open state.

According to various embodiments, the electronic device 500 may automatically transition between the open state and the closed state by a driving unit disposed in the first space and/or the second space. For example, a processor (e.g., the processor 120 of FIG. 1) of the electronic device 500 may be configured to control an operation of the first housing 510 using the driving unit when an event for a transition between the open state and the closed state of the electronic device 500 is detected. In another embodiment, the first housing 510 may manually protrude from the second housing 520 through a user's manipulation. In this case, the first housing 510 may protrude by a desired protrusion amount by the user, and thus, a screen of the flexible display 530 may vary to have various display areas. Accordingly, the processor (e.g., the processor 120 of FIG. 1) of the electronic device 500 may display an object in various ways corresponding to a display area corresponding to a predetermined protrusion amount of the first housing 510, and may control to execute an application program.

According to various embodiments, the electronic device 500 may include at least one of an input device 503, sound output devices 506 and 507, sensor modules 504 and 517, camera modules 505 and 516, a connector port 508, a key input device (not shown), or an indicator (not shown). In another embodiment, at least one of the above-described components of the electronic device 500 may be omitted, or the electronic device 500 may further include other components.

According to various embodiments, the input device 503 may include a microphone 503. In some embodiments, the input device 503 may include a plurality of microphones 503 arranged to sense a direction of sound. The sound output devices 506 and 507 may include speakers 506 and 507. The speakers 506 and 507 may include an external speaker 506 and a phone call receiver 507. In another embodiment, when an external speaker 506' is disposed in the first housing 510, sound may be output through a speaker hole 506 formed in the second housing 520 in the closed state. According to an embodiment, the microphone 503 or the connector port 508 may also be formed to have substantially the same configuration. In another embodiment, the sound output devices 506 and 507 may include a speaker (e.g., a piezo speaker) that operates without a separate speaker hole 506.

According to various embodiments, the sensor modules 504 and 517 may generate an electrical signal or a data value corresponding to an internal operational state of the electronic device 500 or an external environmental state. The sensor modules 504 and 517 may include, for example, a first sensor module 504 (e.g., a proximity sensor or an illuminance sensor) disposed on a front surface of the second housing 520, and/or a second sensor module 517 (e.g., a heart rate monitoring (HRM) sensor) disposed on a rear surface of the second housing 520. According to an embodiment, the first sensor module 504 may be disposed below the flexible display 530 in the second housing 520. According to an embodiment, the first sensor module 504 may further include at least one of a proximity sensor, the illuminance sensor 504, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera devices 505 and 516 may include a first camera device 505 disposed on the front surface of the second housing 520 of the electronic device 500, and a second camera device 516 disposed on the rear surface of the second housing 520. According to an embodiment, the electronic device 500 may include a flash 518 located near the second camera device 516. According to an embodiment, the camera devices 505 and 516 may include one or more lenses, an image sensor, and/or an ISP. According to an embodiment, the first camera device 505 may be disposed under the flexible display 530, and may be configured to capture an object through a portion of an active area of the flexible display 530. According to an embodiment, the flash 518 may include, for example, an LED or a xenon lamp. In some embodiments, two or more lenses (e.g., a wide-angle lens and a telephoto lens) and image sensors may be disposed on one surface of the electronic device 500.

According to various embodiments, the electronic device 500 may include at least one antenna (not shown). According to an embodiment, the at least one antenna may wirelessly communicate with an external electronic device (e.g., the electronic device 104 of FIG. 1), or may wirelessly transmit and receive power required for charging. According to an embodiment, the antenna may include a legacy antenna, a mmWave antenna, a near field communication (NFC) antenna, a wireless charging antenna, and/or a magnetic secure transmission (MST) antenna. In another embodiment, an antenna structure may be formed through at least a portion of the first side frame 512 and/or the second side frame 522, which are formed of metal.

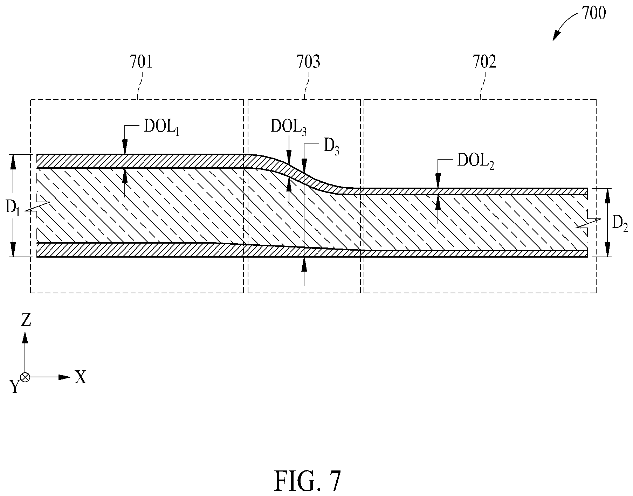

FIG. 7 is a cross-sectional view of a glass substrate for a flexible display according to various embodiments.

Referring to FIG. 7, a glass substrate 700 may include a first portion 701, a second portion 702, and a third portion 703 that is arranged between the first portion 701 and the second portion 702 to connect the first portion 701 and the second portion 702. According to various embodiments, a thickness $D_1$ of the first portion 701 may be greater than a thickness $D_2$ of the second portion 702. According to various embodiments, a thickness of each of the first portion 701 and the second portion 702 may be constant or substantially constant. According to various embodiments, an average thickness of the first portion 701 may be greater than an average thickness of the second portion 702.

According to various embodiments, the second portion 702 may be formed by performing slimming or computer numerical control (CNC) machining on a portion of the glass substrate 700 to have a smaller thickness than that of the first portion 701. The slimming may include at least one of wet etching, polishing, laser forming, dry etching, or masking.

According to various embodiments, the glass substrate 700 may be strengthened to a predetermined depth from the surface through chemical strengthening. According to various embodiments, a "depth of layer (DOL)" may refer to a depth from a surface to the inside of the substrate in which ions are substituted by chemical strengthening, and may be obtained by measuring a depth from the surface to a point at which substitutional ions of a strengthening salt penetrate.

According to various embodiments, the glass substrate 700 may have improved strength through surface chemical strengthening, and may have increased strength against external impact by substituting small ions in the glass substrate with larger ions and generating a compressive stress (CS, compression strength) in the glass substrate. According to various embodiments, the glass substrate 700 may be immersed in a chemical strengthening solution including substitutional ions to perform the chemical strengthening, and at this time, alkali ions in the glass substrate 700 may be substituted with alkali substitutional ions in the chemical strengthening solution. For example, $Li^+$ ions in the glass substrate 700 may be firstly substituted with $Na^+$ ions in the chemical strengthening solution and the substituted $Na^+$ ions may be secondly substituted with $K^+$ ions so that double chemical strengthening may be performed. Alternatively, the $Na^+$ ions in the glass substrate 700 may be substituted with $K^+$ ions in the chemical strengthening solution to generate a stress inside the glass substrate 700 through single chemical strengthening.

Referring to FIG. 7, the glass substrate 700 may be strengthened to a predetermined depth from the surface by performing the surface strengthening, and thus, the strengthening may be performed from upper and lower surfaces of a cross section. According to various embodiments, a depth of layer $DOL_1$ of the first portion 701 may be greater than a depth of layer $DOL_2$ of the second portion. According to various embodiments, the depth of layer $DOL_1$ of the first portion 701 and the depth of layer $DOL_2$ of the second portion 702 may each be constant or substantially constant. According to various embodiments, an average of the depth of layer $DOL_1$ of the first portion 701 may be greater than an average of the depth of layer $DOL_2$ of the second portion 702.

According to various embodiments, the third portion 703 connects the first portion 701 and the second portion 702, and the third portion 703 may have a thickness $D_3$ that gradually changes from the thickness of the first portion 701 to the thickness of the second portion 702, in order to connect the two portions having different thicknesses. For example, a thickness of an end of the third portion 703 in a direction of the second portion 702 (e.g., +Y direction) may be smaller than a thickness of an end of the third portion 703 in a direction of the first potion 701 (e.g., -Y direction). According to various embodiments, the depth of layer $DOL_3$ of the third portion 703 may change according to the change of the thickness $D_3$ of the third potion 703, and the depth of layer $DOL_3$ of the third portion 703 may be determined according to the thickness $D_3$ of the third portion 703.

According to various embodiments, the third portion 703 may be connected to the first portion 701 in the -X direction and may be connected to the second portion 702 in the +X direction. According to various embodiments, the thickness $D_1$ of the first portion 701 may be greater than the thickness $D_2$ of the second portion 702, a thickness of an end of the third portion 703 in the -X direction may be the same as the thickness $D_1$ of the first portion 701, and a thickness of an end of the third portion 703 in the +X direction may be the same as the thickness $D_2$ of the second portion 702. According to various embodiments, the thickness $D_3$ of the third portion 703 may gradually decrease from the end in the -X direction to the end in the +X direction, the thickness $D_3$ may vary depending on a portion of the third portion 703, and the depth of layer $DOL_3$ of the third portion 703 may be determined according to the thickness $D_3$ of the third portion 703.

According to various embodiments, the chemical strengthening of the glass substrate 700 may be performed by immersing the glass substrate 700 in the chemical strengthening solution, and the depth of layer may be determined according to the time of the immersion in the chemical strengthening solution. According to various embodiments, the glass substrate 700 may include several portions with different thicknesses, for example, the first portion 701 with a relatively great thickness, the second portion 702 with a relatively small thickness, and the third portion 703 with a thickness gradually changing to connect the first portion 701 and the second portion 702, and the glass substrate 700 may have various depths of layer for each portion of the substrate. According to various embodiments, small ions near the surface may be substituted with larger ions through the surface chemical strengthening of the glass substrate 700, and the glass substrate 700 may be expanded. According to various embodiments, the depth of layer of the glass substrate 700 may be determined according to the thickness, and the glass substrate 700 having a variable depth of layer according to various embodiments may have the same or substantially the same expansion rates regardless of the location, compared to a glass substrate having a constant depth of layer. As a result, the expansion rate of the glass substrate 700 may be the same or substantially the same.

According to various embodiments, the glass substrate 700 may include the first portion 701, the second portion 702, and the third portion 703 connecting the first portion 701 and the second portion 702, and an average thickness $D_1$ of the first portion 701 may be greater than an average thickness $D_2$ of the second portion 702. The glass substrate 700 may be formed in various shapes. According to various embodiments, the glass substrate 700 may include the first portion 701, the third portion 703, the second portion 702, a fourth portion (not shown), and a fifth portion (not shown). The fourth portion (not shown) may connect the second portion 702 and the fifth portion (not shown), and an average thickness of the fifth portion (not shown) may be greater or less than the average thickness $D_2$ of the second portion 702. For example, the average thickness of the fifth portion (not shown) is less than the average thickness $D_2$ of the second portion 702, and the glass substrate 700 may be a glass substrate having two or more thickness-variable portions. The average thickness of the fifth portion (not shown) is greater than the average thickness $D_2$ of the second portion 702 and may be the same or substantially the same as the average thickness $D_1$ of the first portion 701, and the glass substrate 700 may be a glass substrate having two or more thickness-variable portions.

According to various embodiments, the thickness $D_1$ of the first portion 701 may be about 50 micrometers ($\mu$m) to about 500 $\mu$m. According to various embodiments, the thickness of the first portion 701 may be constant or substantially constant. According to various embodiments, the average thickness of the first portion 701 may be about 50 $\mu$m to about 500 $\mu$m.

According to various embodiments, the thickness $D_1$ of the first portion 701 may be about 50 $\mu$m or more, about 100 $\mu$m or more, about 150 $\mu$m or more, about 200 $\mu$m or more, about 250 $\mu$m or more, about 300 $\mu$m or more, about 350 $\mu$m or more, about 400 $\mu$m or more, or about 450 $\mu$m or more, may be about 500 $\mu$m or less, about 450 $\mu$m or less, about 400 $\mu$m or less, about 350 $\mu$m or less, about 300 $\mu$m or less, about 250 $\mu$m or less, about 200 $\mu$m or less or less, about 150 $\mu$m or less, or about 100 $\mu$m or less, or may be in a range between two values selected from the above-described values. According to various embodiments, the thickness $D_1$ of the first portion 701 may be constant or substantially constant, and thus, the thickness of the first portion 701 may be the same as or similar to the average thickness of the first portion 701.

According to various embodiments, the thickness $D_2$ of the second portion 702 may be about 10 $\mu$m to about 80 $\mu$m. According to various embodiments, the thickness of the second portion 702 may be constant or substantially constant. According to various embodiments, the average thickness of the second portion 702 may be about 10 $\mu$m to about 80 $\mu$m.

According to various embodiments, the thickness of the second portion 702 may be about 10 $\mu$m or more, about 20 $\mu$m or more, about 30 $\mu$m or more, about 40 $\mu$m or more, about 50 $\mu$m or more, about 60 $\mu$m or more, or about 70 $\mu$m or more, may be about 80 $\mu$m or less, about 70 $\mu$m or less, about 60 $\mu$m or less, about 50 $\mu$m or less, about 40 $\mu$m or less, about 30 $\mu$m or less, or about 20 $\mu$m or less, or may be in a range between two values selected from the above-described values. According to various embodiments, the thickness $D_2$ of the second portion 702 may be constant or substantially constant, and thus, the thickness of the second portion 702 may be the same as or similar to the average thickness of the second portion 702.

According to various embodiments, the thickness of the second portion 702 may be 90% or less of the thickness of the first portion 701. According to various embodiments, when a glass substrate including portions with two or more different thicknesses has the same depth of layer regardless of the thicknesses, warping or bending may occur due to a difference in the expansion rate. According to various embodiments, a display device of a foldable electronic device (e.g., the electronic device 200 of FIG. 2) or a rollable electronic device (e.g., the electronic device 500 of FIG. 5) may have a small thickness of a glass substrate in a folding portion or a rolling portion. According to various embodiments, the thickness $D_2$ of the second portion 702 may be smaller than the thickness $D_1$ of the first portion 701 by 90% or less, desirably smaller than the thickness $D_1$ of the first portion 701 by 70% or less, and more desirably smaller than the thickness $D_1$ of the first portion 701 by 50% or less.

According to various embodiments, the depth of layer $DOL_1$ of the first portion 701 may be 5% to 25% of the thickness $D_1$ of the first portion 701. For example, when the thickness $D_1$ of the first portion 701 is 200 $\mu$m, the depth of layer $DOL_1$ of the first portion 701 may be 10 $\mu$m to 50 $\mu$m, and accordingly a strengthened surface of the first portion 701 may have a thickness of 20 $\mu$m to 100 $\mu$m out of a total thickness of 200 $\mu$m. According to various embodiments,

the thickness $D_1$ of the first portion 701 may be constant or substantially constant, the depth of layer $DOL_1$ of the first portion 701 may be constant or substantially constant, and an average of the depth of layer of the first portion 701 may be 15% to 20% of the average thickness of the first portion 701.

According to various embodiments, the depth of layer $DOL_2$ of the second portion 702 may be 5% to 25% of the thickness $D_2$ of the second portion 702. For example, when the thickness $D_2$ of the second portion 702 is 50 $\mu$m, the depth of layer $DOL_2$ of the second portion 702 may be 2.5 $\mu$m to 12.5 $\mu$m, and accordingly a strengthened surface of the second portion 702 may have a thickness of 5 $\mu$m to 25 $\mu$m out of a total thickness of 50 $\mu$m. According to various embodiments, the thickness $D_2$ of the second portion 702 may be constant or substantially constant, the depth of layer $DOL_2$ of the second portion 702 may be constant or substantially constant, and an average of the depth of layer of the second portion 702 may be 15% to 20% of the average thickness of the second portion 702.

According to various embodiments, an average of the depth of layer $DOL_3$ of the third portion 703 may be 5% to 25% of an average of the thickness $D_3$ of the third portion 703. According to various embodiments, the thickness $D_3$ and the depth of layer $DOL_3$ of the third portion 703 may be different according to the location, and the depth of layer $DOL_3$ of the third portion 703 may be proportional to the thickness $D_3$ of the third portion 703. For example, the average of the depth of layer $DOL_3$ of the third portion 703 may be 15% to 20% of the average of the thickness $D_3$ of the third portion 703.

According to various embodiments, the glass substrate 700 may include at least one of soda-lime glass, lead-alkali glass, borosilicate glass, aluminosilicate glass, aluminum lithium silicate glass, or silica glass. However, the glass substrate 700 is not limited thereto, and any glass may be used as long as it may be used as the glass substrate 700. For example, the glass substrate 700 may contain an element including at least one of aluminum, lithium, boron, or lead, and may be, for example, glass with a strength enhanced by adding the element.

According to various embodiments, the glass substrate 700 may be suitable for use for a display device (display) of a portable electronic device or a cover of an electronic device.

According to various embodiments, the first portion 701 may have a concentration of potassium ions $K^+$ decreasing from the surface to the inside of the first portion 701. Referring to FIG. 7, the chemical strengthening may be performed on the surface of the first portion 701 in the +Z direction and the surface thereof in the -Z direction. For example, in a case of the surface of the first portion 701 in the +Z direction, the chemical strengthening may be performed by ion exchange from the surface in the -Z direction. As the ion exchange is performed from the surface, the concentration of potassium ions may decrease from the surface in the -Z direction. For the surface of the first portion 701 in the -Z direction, the concentration of potassium ions may decrease from the surface in the +Z direction in the same manner as described above.

According to various embodiments, the second portion 702 may have a concentration of potassium ions $K^+$ decreasing from the surface to the inside of the second portion 702. Referring to FIG. 7, the chemical strengthening may be performed on the surface of the second portion 702 in the +Z direction and the surface thereof in the -Z direction. For example, in a case of the surface of the second portion 702 in the +Z direction, the chemical strengthening may be performed by ion exchange from the surface in the -Z direction. As the ion exchange is performed from the surface, the concentration of potassium ions may decrease from the surface in the -Z direction. For the surface of the second portion 702 in the -Z direction, the concentration of potassium ions may decrease from the surface in the +Z direction in the same manner as described above.

According to various embodiments, the third portion 703 may have a concentration of potassium ions $K^+$ decreasing from the surface to the inside of the third portion 703. Referring to FIG. 7, the chemical strengthening may be performed on the surface of the third portion 703 in the +Z direction and the surface thereof in the -Z direction. For example, in a case of the surface of the third portion 703 in the +Z direction, the chemical strengthening may be performed by ion exchange from the surface in the -Z direction. As the ion exchange is performed from the surface, the concentration of potassium ions may decrease from the surface in the -Z direction. For the surface of the third portion 703 in the -Z direction, the concentration of potassium ions may decrease from the surface in the +Z direction in the same manner as described above.

According to various embodiments, the difference between the amount of expansion of the first portion 701 and the amount of expansion of the second portion 702 may be about 0.5 mm or less. According to various embodiments, the "amount of expansion" may be calculated from a difference between lengths of the glass substrate 700 in a width direction (e.g., the X direction) and/or a longitudinal direction (e.g., Y direction) before and after the chemical strengthening. For example, when a length of the first portion 701 in the width direction (e.g., the X direction) before the chemical strengthening is 50 mm and a length of the first portion 701 in the width direction after the chemical strengthening is 51 mm, the amount of expansion of the first portion 701 in the width direction may be calculated as 1 mm.

According to various embodiments, a difference between the amount of expansion of the first portion 701 and the amount of expansion of the second portion 702 may be determined according to a difference between a ratio of the depth of layer $DOL_1$ of the first portion 701 to the thickness $D_1$ of the first portion 701 and a ratio of the depth of layer $DOL_2$ of the second portion 702 to the thickness $D_2$ of the second portion 702.

According to a comparative example, when the depth of layer $DOL_2$ of the second portion 702 is formed in the same manner as the depth of layer $DOL_1$ of the first portion 701, the chemical strengthening may be excessively performed on the second portion 702 that is relatively thinner than the first portion 701, and the percentage of the depth of layer $DOL_2$ in the second portion 702 may be excessively high, resulting in warping and wrinkling. According to a comparative example, when the depth of layer $DOL_1$ of the first portion 701 is formed in the same manner as the depth of layer $DOL_2$ of the second portion 702, the chemical strengthening may not be performed less on the first portion 701 that is relatively thicker than the second portion 702, and durability of the glass substrate 700 may be reduced due to an excessively low proportion of the depth of layer $DOL_1$ of the first portion 701.

In the glass substrate 700 according to various embodiments, the ratio of the depth of layer $DOL_1$ of the first portion 701 to the thickness $D_1$ of the first portion 701 may be the same or substantially the same as the ratio of the depth of layer $DOL_2$ of the second portion 702 to the thickness $D_2$ of the second portion 702, and the difference between the amount of expansion of the first portion 701 and the amount of expansion of the second portion 702 may be 0.5 mm or less. According to various embodiments, the difference between the amount of expansion of the first portion 701 and the amount of expansion of the second portion 702 may be desirably 0.3 mm or less, and more desirably 0.1 mm or less, or 0.05 mm or less.

According to various embodiments, the second portion 702 may have a radius of curvature of 0.5 mm or less when bending. According to various embodiments, the glass substrate 700 may be rolled or folded with respect to the second portion 702, and at this time, a radius of curvature of the bended second portion 702 may be 0.5 mm or less. According to various embodiments, the radius of curvature of the second portion 702 when bending may be 0.4 mm or less, 0.3 mm or less, 0.2 mm or less, or 0.1 mm or less.

According to various embodiments, a compressive stress of each of the first portion 701, the second portion 702, and the third portion 703 based on a depth of layer may satisfy Equation 1 shown below.

$$[\text{Equation 1}]$$
$$DOL \times 14 + 840 \leq CS \leq DOL \times 14.3 + 840$$

(DOL: depth of layer, CS: compressive stress)

According to various embodiments, the thickness and the depth of layer of the first portion 701, the second portion 702, and the third portion 703 may be the same as each other or different from each other depending on location, respectively. According to various embodiments, the depth of layer and the compressive stress based on the location of each portion may be proportional and may specifically satisfy Equation 1.

According to various embodiments, the depth of layer $DOL_3$ of the third portion 703 may be proportional to the thickness $D_3$ of the third portion 703. According to various embodiments, the thickness $D_3$ and the depth of layer $DOL_3$ of the third portion 703 may be different according to the location. As the thickness $D_3$ of the third portion 703 increases, the depth of layer $DOL_3$ of the third portion 703 increases.

According to various embodiments, the third portion 703 may form an inclination of 1° to 50° with respect to an extending plane of the first portion 701. According to various embodiments, the third portion 703 may be formed with a thickness that gradually decreases from the first potion 701 to the second portion 702. According to various embodiments, the inclination of the third portion 703 may be 1° to 50° with respect to an extending direction of the first portion 701. According to various embodiments, the inclination of the third portion 703 may be calculated with respect to, for example, the X axis as the extending direction of the first portion 701, and the inclination of the third portion 703 may be 1° to 50° with respect to the X axis.

According to various embodiments, an average thickness of a first portion (e.g., the first portion 701 of FIG. 7) may be 50 μm to 500 μm.

According to various embodiments, an average thickness of a second portion (e.g., the second portion 702 of FIG. 7) may be 10 μm to 80 μm.

According to various embodiments, the average thickness of the second portion (e.g., the second portion 702 of FIG. 7) may be less than or equal to 90% of the average thickness of the first portion (e.g., the first portion 701 of FIG. 7).

According to various embodiments, an average of a depth of layer of the first portion (e.g., the first portion 701 of FIG. 7) may be 5% to 25% of the average thickness of the first portion (e.g., the first portion 701 of FIG. 7), an average of a depth of layer of the second portion (e.g., the second portion 702 of FIG. 7) may be 5% to 25% of the average thickness of the second portion (e.g., the second portion 702 of FIG. 7), and an average of a depth of layer of a third portion (e.g., the third portion 703 of FIG. 7) may be 5% to 25% of the average thickness of the third portion (e.g., the third portion 703 of FIG. 7).

According to various embodiments, a glass substrate (e.g., the glass substrate 700 of FIG. 7) may include at least one of soda-lime glass, lead-alkali glass, borosilicate glass, aluminosilicate glass, aluminum lithium silicate glass, or silica glass.

According to various embodiments, a concentration of potassium ions in the first portion (e.g., the first portion 701 of FIG. 7) may decrease from a surface of the first portion (e.g., the first portion 701 of FIG. 7) to the inside thereof, and a concentration of potassium ions in the second portion (e.g., the second portion 702 of FIG. 7) may decrease from a surface of the second portion (e.g., the second portion 702 of FIG. 7) to the inside thereof.

According to various embodiments, a difference between an amount of expansion of the first portion (e.g., the first portion 701 of FIG. 7) and an amount of expansion of the second portion (e.g., the second portion 702 of FIG. 7) may be 0.5 mm or less.

According to various embodiments, the second portion (e.g., the second portion 702 of FIG. 7) may have a radius of curvature of 0.5 mm or less when bending.

According to various embodiments, a compressive stress of each of the first portion (e.g., the first portion 701 of FIG. 7), the second portion (e.g., the second portion 702 of FIG. 7), and the third portion (e.g., the third portion 703 of FIG. 7) based on a depth of layer may satisfy Equation 1 shown below.

[Equation 1]

$$DOL \times 14 + 840 \leq CS \leq DOL \times 14.3 + 840$$

(DOL: depth of layer, CS: compressive stress)

According to various embodiments, the depth of layer of the third portion (e.g., the third portion 703 of FIG. 7) may be proportional to the thickness of the third portion (e.g., the third portion 703 of FIG. 7).

According to various embodiments, the third portion (e.g., the third portion 703 of FIG. 7) may form an inclination of 1° to 50° with respect to an extending plane of the first portion (e.g., the first portion 701 of FIG. 7).

A display device for a flexible display according to various embodiments may include a display module (e.g., the display device 160 of FIG. 1, the display 250 of FIG. 2, and the flexible display 530 of FIG. 5) including a folding portion (e.g., the folding area 253 of FIG. 2) and a non-folding portion (e.g., the first area 251 and the second area 252 of FIG. 2) adjacent to the folding portion, and a glass substrate arranged on the display module. According to various embodiments, the glass substrate included in the display device may be the aforementioned glass substrate. For example, the glass substrate may include a first portion (e.g., the first portion 701 of FIG. 7), a second portion (e.g., the second portion 702 of FIG. 7), and a third portion (e.g., the third portion 703 of FIG. 7) that connects the first portion and the second portion, an average thickness of the first portion (e.g., the first portion 701 of FIG. 7) may be greater than an average thickness of the second portion (e.g., the second portion 702 of FIG. 7), an average of a depth of layer of the first portion (e.g., the first portion 701 of FIG. 7) may be greater than an average of a depth of layer of the second portion (e.g., the second portion 702 of FIG. 7), and a depth of layer of the third portion (e.g., the third portion 703 of FIG. 7) may be determined according to a thickness of the third portion (e.g., the third portion 703 of FIG. 7).

According to various embodiments, the first portion (e.g., the first portion 701 of FIG. 7) of the glass substrate (e.g., the glass substrate 700 of FIG. 7) may correspond to the non-folding portion (e.g., the first area 251 and the second area 252 of FIG. 2), and the second portion (e.g., the second portion 702 of FIG. 7) may correspond to the folding portion (e.g., the folding portion 253 of FIG. 2).

The display device according to various embodiments may further include a transparent resin material filled between the glass substrate (e.g., the glass substrate 700 of FIG. 7) and the display module (e.g., the display device 160 of FIG. 1, the display 250 of FIG. 2, and the flexible display 530 of FIG. 5). According to various embodiments, the transparent resin material may include at least one of an acrylic compound, an epoxy-based compound, silicon, a urethane-based compound, a urethane composite, a urethane acrylic composite, a hybrid sol-gel, or a siloxane-based compound. According to various embodiments, the transparent resin material may include a composition having the same or substantially the same refractive index as that of the glass substrate (e.g., the glass substrate 700 of FIG. 7), and may be applied for the bonding of the glass substrate (e.g., the glass substrate 700 of FIG. 7) and the display module (e.g., the display device 160 of FIG. 1, the display 250 of FIG. 2, and the flexible display 530 of FIG. 5). According to various embodiments, the transparent resin material may reinforce strength and elasticity of the glass substrate (e.g., the glass substrate 700 of FIG. 7).

According to various embodiments, the first portion (e.g., the first portion 701 of FIG. 7) may correspond to the non-folding portion (e.g., the first area 251 and the second area 252 of FIG. 2), and the second portion (e.g., the second portion 702 of FIG. 7) may correspond to the folding portion (e.g., the folding portion 253 of FIG. 2).

According to various embodiments, the display device may further include the transparent resin material filled between the glass substrate (e.g., the glass substrate 700 of FIG. 7) and the display module (e.g., the display device 160 of FIG. 1, the display 250 of FIG. 2, and the flexible display 530 of FIG. 5).

According to various embodiments, the transparent resin material may include at least one of an acrylic compound, an epoxy-based compound, silicon, a urethane-based compound, a urethane composite, a urethane acrylic composite, a hybrid sol-gel, or a siloxane-based compound.

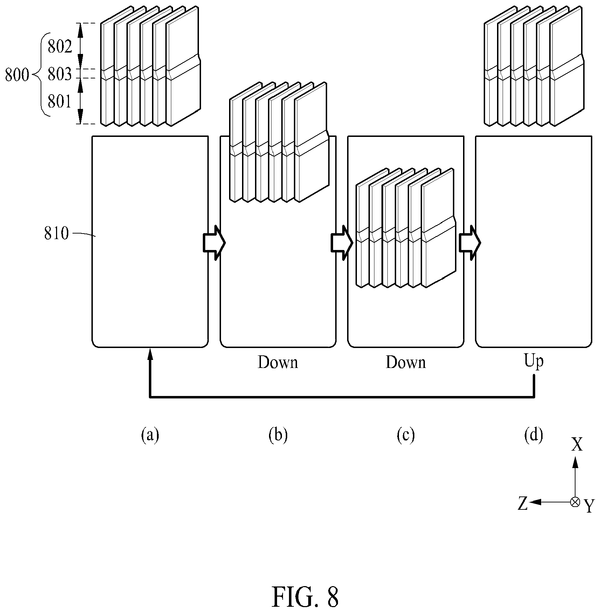

FIG. 8 is a diagram illustrating a process of a glass substrate for a flexible display according to various embodiments.

A method of manufacturing the glass substrate for a flexible display according to various embodiments may include preparing a glass substrate 800 including a first portion 801 (e.g., the first portion 701 of FIG. 7) and a second portion 802 (e.g., the second portion 702 of FIG. 7) having a thickness smaller than a thickness of the first portion 801 (FIG. 8(a)), immersing the first portion 801 of the glass substrate 800 in a chemical strengthening solution 810 such that the first portion 801 is immersed (FIG. 8(b)), and secondly immersing the second portion 802 in the chemical strengthening solution 810 such that the glass substrate 800 is completely immersed (FIG. 8(c)).

According to various embodiments, the glass substrate 800 may include a third portion 803 located between the first portion 801 and the second portion 802 to connect the first portion 801 and the second portion 802. According to various embodiments, the third portion 803 may have a thickness between the first portion 801 and the second portion 802, and the thickness may vary depending on the location.

According to various embodiments, the chemical strengthening solution 810 may include a strengthening salt. According to various embodiments, the glass substrate 800 may be immersed in the chemical strengthening solution 810 so that the chemical strengthening may be performed from the surface of the substrate to the inside thereof. For example, the chemical strengthening solution may include potassium nitrate, sodium nitrate, or both. According to various embodiments, the strengthening salt may include potassium nitrate, sodium nitrate, or both. According to various embodiments, the chemical strengthening solution 810, in which the chemical strengthening is performed, may be 350°C to 450°C.

According to various embodiments, each of the firstly immersing (FIG. 8(a)) and the secondly immersing (FIG. 8(c)) may include performing chemical strengthening according to exchange of alkali ions on the surface of the glass substrate 800. According to various embodiments, the glass substrate 800 may be immersed in the chemical strengthening solution including substitutional ions to perform the chemical strengthening, and at this time, alkali ions in the glass substrate 800 may be substituted with alkali substitutional ions in the chemical strengthening solution. For example, $Li^+$ ions in the glass substrate 800 may be firstly substituted with $Na^+$ ions in the chemical strengthening solution and the substituted $Na^+$ ions may be secondly substituted with $K^+$ ions so that double chemical strengthening may be performed. Alternatively, the $Na^+$ ions in the glass substrate 800 may be substituted with $K^+$ ions in the chemical strengthening solution to generate a stress inside the glass substrate 800 through single chemical strengthening.

According to various embodiments, the firstly immersing and the secondly immersing may be separately performed to make the time for the first portion 801 and the second portion 802 to be immersed in the chemical strengthening solution 810 different. According to various embodiments, in each of the firstly immersing and the secondly immersing, the depth of layer may be formed differently depending on the location even in the first portion 801 and the second portion 802 by adjusting a speed of putting the first portion 801 and the second portion 802 into the chemical strengthening solution 810.

According to various embodiments, the firstly immersing may include gradually immersing the first portion 801 in the chemical strengthening solution 810, for example, immersing the first portion 801 in the chemical strengthening solution 810 at 5 mm/min to 20 mm/min. According to various embodiments, the secondly immersing may include gradually immersing the second portion 802 in the chemical strengthening solution 810, for example, immersing the second portion 802 in the chemical strengthening solution 810 at 5 mm/min to 20 mm/min. However, an immersion speed of the glass substrate into the chemical strengthening solution 810 is not limited to the above range and may be flexibly applied depending on the condition of a furnace.

According to various embodiments, the method may further include thirdly immersing the glass substrate 800 in the chemical strengthening solution such that the third portion 803 is immersed, between the firstly immersing and the secondly immersing. According to various embodiments, a thickness of the third portion 803 may vary depending on the location, and the thirdly immersing may include immersing the glass substrate at an immersion speed different from those of the firstly immersing and the secondly immersing, to differently form a depth of layer according to the location. For example, the immersion speed of the glass substrate in the firstly immersing and the secondly immersing may be 5 mm/min to 20 mm/min, and the immersion speed of the glass substrate in the thirdly immersing may be 2.5 mm/min to 10 mm/min.

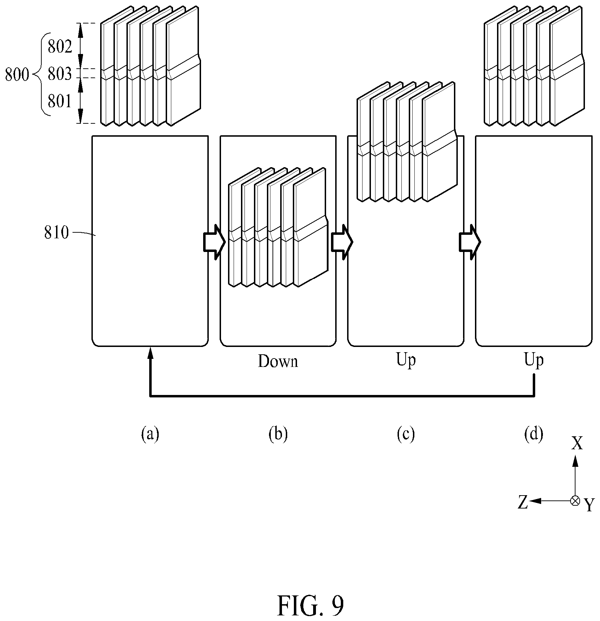

FIG. 9 is a diagram illustrating a process of a glass substrate for a flexible display according to various embodiments.

A method of manufacturing the glass substrate for a flexible display according to various embodiments may include preparing the glass substrate 800 including the first portion 801 (e.g., the first portion 701 of FIG. 7) and the second portion 802 (e.g., the second portion 702 of FIG. 7) having a thickness smaller than a thickness of the first portion 801 (FIG. 9(a)), immersing the glass substrate 800 in the chemical strengthening solution 810 such that the first portion 801 and the second portion 802 are immersed (FIG. 9(b)), extracting the second portion 802 from the chemical strengthening solution 810 such that only the first portion 801 is immersed (FIG. 9(c)), and extracting the first portion 801 of the glass substrate 800 from the chemical strengthening solution 810 (FIG. 9(a)).

**EP 4 382 497 A1**

According to various embodiments, the chemical strengthening solution 810 may include a strengthening salt. According to various embodiments, the glass substrate 800 may be immersed in the chemical strengthening solution 810 so that the chemical strengthening may be performed from the surface of the substrate to the inside thereof. For example, the chemical strengthening solution may include potassium nitrate, sodium nitrate, or both. According to various embodiments, the strengthening salt may include potassium nitrate, sodium nitrate, or both. According to various embodiments, the chemical strengthening solution 810, in which the chemical strengthening is performed, may be 350°C to 450°C.

According to various embodiments, the immersing (FIG. 9(b)) may include performing chemical strengthening according to exchange of alkali ions on the surface of the glass substrate 800. According to various embodiments, the glass substrate 800 may be immersed in the chemical strengthening solution including substitutional ions to perform the chemical strengthening, and at this time, alkali ions in the glass substrate 800 may be substituted with alkali substitutional ions in the chemical strengthening solution. For example, $Li^+$ ions in the glass substrate 800 may be firstly substituted with $Na^+$ ions in the chemical strengthening solution and the substituted $Na^+$ ions may be secondly substituted with $K^+$ ions so that double chemical strengthening may be performed. Alternatively, the $Na^+$ ions in the glass substrate 800 may be substituted with $K^+$ ions in the chemical strengthening solution to generate a stress inside the glass substrate 800 through single chemical strengthening.

At this time, the depth of layer may be controlled by extracting the second portion 802 from the chemical strengthening solution 810, stopping the chemical strengthening, and performing additional chemical strengthening only for the first portion 801 (e.g., FIG. 9(c)).

According to various embodiments, the immersing and the extracting may be performed by flexibly controlling the speed according to the condition of a furnace. For example, the immersing may include immersing in the chemical strengthening solution 810 at 5 mm/min to 20 mm/min.

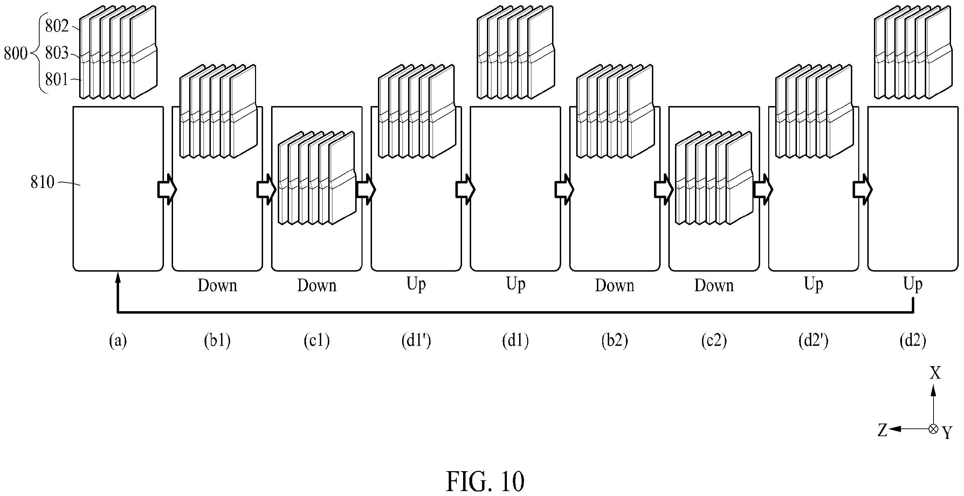

FIG. 10 is a diagram illustrating a process of a glass substrate for a flexible display according to various embodiments.

According to various embodiments, the glass substrate 800 may be extracted after the secondly immersing, and then, the firstly immersing and the secondly immersing may be sequentially performed multiple times. For example, after preparing the glass substrate 800 including the first portion 801 and the second portion 802 (FIG. 10(a)), firstly immersing the first portion 801 in the chemical strengthening solution 810 (FIG. 10(b1), and secondly immersing the second portion 802 in the chemical strengthening solution 810 such that the glass substrate 800 is completely immersed (FIG. 10(c1)), and the firstly immersing and the secondly immersing may be performed multiple times after extracting the glass substrate 800 (FIG. 10(d1)). For example, after the glass substrate 800 is extracted (FIG. 10(d1)), the firstly immersing (FIG. 10(b2)) and the secondly immersing (FIG. 10(c2)) may be performed again. According to various embodiments, the extracting of the glass substrate 800 may be performed in the reverse order of the firstly immersing and the secondly immersing. For example, the extracting of the glass substrate 800 may include extracting the glass substrate 800 to the outside of the chemical strengthening solution 810 at 5 mm/min to 20 mm/min.

According to various embodiments, each of the firstly immersing, the secondly immersing, and the thirdly immersing may have a resting time after the immersion. According to various embodiments, a degree of the chemical strengthening may be controlled through the time of the glass substrate 800 exposed to the chemical strengthening solution 810.

According to various embodiments, each of the firstly immersing and the secondly immersing may include performing the chemical strengthening by exchange of alkali ions on the surface of the glass substrate.

According to various embodiments, the chemical strengthening solution may include potassium nitrate.

According to various embodiments, the glass substrate is extracted after the secondly immersing, and then, the firstly immersing and the secondly immersing may be sequentially performed multiple times.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A glass substrate for a flexible display, the glass substrate comprising:

   a first portion;
   a second portion; and
   a third portion that connects the first portion and the second portion,
   wherein an average thickness of the first portion is greater than an average thickness of the second portion,
   wherein an average of a depth of layer of the first portion is greater than an average of a depth of layer of the second portion, and
   wherein a depth of layer of the third portion is determined according to a thickness of the third portion.

2. The glass substrate of claim 1,

   wherein the average thickness of the first portion is 50 micrometers ($\mu$m) to 500 $\mu$m, and
   wherein the average thickness of the second portion is 10 $\mu$m to 80 $\mu$m.

3. The glass substrate of claim 1, wherein the average thickness of the second portion is 90% or less of the average thickness of the first portion.

4. The glass substrate of claim 1,

   wherein the average of the depth of layer of the first portion is 5% to 25% of the average thickness of the first portion,
   wherein the average of the depth of layer of the second portion is 5% to 25% of the average thickness of the second portion, and
   wherein an average of the depth of layer of the third portion is 5% to 25% of an average thickness of the third portion.

5. The glass substrate of claim 1, comprising at least one of soda-lime glass, lead-alkali glass, borosilicate glass, aluminosilicate glass, aluminum lithium silicate glass, or silica glass.

6. The glass substrate of claim 1,

   wherein the first portion has a concentration of potassium ions decreasing from a surface toward the inside of the first portion, and
   wherein the second portion has a concentration of potassium ions decreasing from a surface toward the inside of the second portion.

7. The glass substrate of claim 1, wherein a difference between an amount of expansion of the first portion and an amount of expansion of the second portion is 0.5 millimeters (mm) or less.

8. The glass substrate of claim 1, wherein the second portion has a radius of curvature of 0.5 mm or less when bending.

9. The glass substrate of claim 1, wherein the first portion, the second portion, and the third portion each have a compressive stress according to a depth of layer that satisfies Equation 1.

[Equation 1]

$$DOL \times 14 + 840 \leq CS \leq DOL \times 14.3 + 840$$

(DOL: depth of layer, CS: compressive stress)

10. The glass substrate of claim 1, wherein the depth of layer of the third portion is proportional to the thickness of the third portion.

11. The glass substrate of claim 1, wherein the third portion forms an inclination of 1° to 50° with respect to an extending plane of the first portion.

12. A display device for a flexible display, the display device comprising:

   a display module comprising a folding portion and a non-folding portion adjacent to the folding portion; and
   a glass substrate disposed on the display module,
   wherein the glass substrate comprises:

      a first portion;
      a second portion; and
      a third portion that connects the first portion and the second portion,

   wherein an average thickness of the first portion is greater than an average thickness of the second portion,
   wherein an average of a depth of layer of the first portion is greater than an average of a depth of layer of the second portion, and
   wherein a depth of layer of the third portion is determined according to a thickness of the third portion.

13. The display device of claim 12, further comprising:

   a transparent resin material filled between the glass substrate and the display module,
   wherein the transparent resin material comprises at least one of an acrylic compound, an epoxy-based compound, silicon, a urethane-based compound, a urethane composite, a urethane acrylic composite, a hybrid sol-gel, or a siloxane-based compound.

14. A method of manufacturing a glass substrate for a flexible display, the method comprising:

   preparing a glass substrate comprising a first portion and a second portion having a thickness smaller than a thickness of the first portion;
   firstly immersing the first portion in a chemical strengthening solution; and
   secondly immersing the second portion in the chemical strengthening solution such that the glass substrate is completely immersed.

FIG. 1

FIG. 2

EP 4 382 497 A1

200

FIG. 3

FIG. 4A

200

250
251
253
252
210
220
201

Z
Y
X

FIG. 4B

FIG. 5A

FIG. 5B

FIG. 6A

FIG. 6B

FIG. 7

FIG. 8

FIG. 9

FIG. 10

<table>
<tr><td colspan="2" align="center">**INTERNATIONAL SEARCH REPORT**</td><td>International application No.<br><br>**PCT/KR2022/014308**</td></tr>
</table>

**A.    CLASSIFICATION OF SUBJECT MATTER**

**C03C 21/00**(2006.01)i; **C03C 15/00**(2006.01)i; **G09F 9/30**(2006.01)i

According to International Patent Classification (IPC) or to both national classification and IPC

**B.    FIELDS SEARCHED**

Minimum documentation searched (classification system followed by classification symbols)

C03C 21/00(2006.01); B32B 17/10(2006.01); B32B 27/08(2006.01); C03B 17/02(2006.01); C03B 23/023(2006.01); C03B 23/025(2006.01); C03B 23/24(2006.01); C03C 17/32(2006.01); C03C 17/34(2006.01); G02F 1/1333(2006.01); G09F 9/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블(flexible), 디스플레이(display), 유리 기판(glass plate)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0059146 A (SAMSUNG DISPLAY CO., LTD. et al.) 25 May 2021 (2021-05-25)<br>    See claims 1-15; and figure 3a. | 1-14 |
| A | KR 10-2021-0054176 A (LG CHEM, LTD.) 13 May 2021 (2021-05-13)<br>    See entire document. | 1-14 |
| A | KR 10-2018-0063940 A (SAMSUNG DISPLAY CO., LTD.) 14 June 2018 (2018-06-14)<br>    See entire document. | 1-14 |
| A | KR 10-2021-0089693 A (CORNING INCORPORATED) 16 July 2021 (2021-07-16)<br>    See entire document. | 1-14 |
| A | KR 10-2020-0054419 A (DANKOOK UNIVERSITY CHEONAN CAMPUS INDUSTRY ACADEMIC COOPERATION FOUNDATION) 20 May 2020 (2020-05-20)<br>    See entire document. | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 December 2022** | **30 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/014308**

| Patent document cited in search report | | | Publication date (day/month/year) | Patent family member(s) | | | Publication date (day/month/year) |
|---|---|---|---|---|---|---|---|
| KR | 10-2021-0059146 | A | 25 May 2021 | CN | 112802396 | A | 14 May 2021 |
| | | | | EP | 3822235 | A1 | 19 May 2021 |
| | | | | EP | 3822235 | B1 | 07 September 2022 |
| | | | | US | 11492289 | B2 | 08 November 2022 |
| | | | | US | 2021-0147286 | A1 | 20 May 2021 |
| KR | 10-2021-0054176 | A | 13 May 2021 | | None | | |
| KR | 10-2018-0063940 | A | 14 June 2018 | CN | 108147680 | A | 12 June 2018 |
| | | | | EP | 3330235 | A1 | 06 June 2018 |
| | | | | TW | 201829343 | A | 16 August 2018 |
| | | | | US | 2018-0155238 | A1 | 07 June 2018 |
| KR | 10-2021-0089693 | A | 16 July 2021 | CN | 113039166 | A | 25 June 2021 |
| | | | | TW | 202026147 | A | 16 July 2020 |
| | | | | US | 2021-0380474 | A1 | 09 December 2021 |
| | | | | WO | 2020-096757 | A1 | 14 May 2020 |
| KR | 10-2020-0054419 | A | 20 May 2020 | KR | 10-2202127 | B1 | 13 January 2021 |

Form PCT/ISA/210 (patent family annex) (July 2022)